# EUROPÄISCHE PATENTSCHRIFT

(11) **EP 4 138 435 B1**
(45) Veröffentlichungstag und Bekanntmachung des Hinweises auf die Patenterteilung: **24.12.2025**
(21) Anmeldenummer: 21191926.1
(22) Anmeldetag: 18.08.2021
(51) Int. Cl.: H04W 12/08, H04W 4/33, H04W 12/00, H04W 12/0431, H04W 12/50, H04W 12/77, G07C 9/27, H04L 9/08, G07C 9/20, G09C 5/00, H04W 12/108

(54) **VERFAHREN FÜR DIE ERTEILUNG EINES ZUGRIFFSRECHTS AUF EINE STEUEREINHEIT IN EINEM GEBÄUDESTEUERUNGSSYSTEM**
METHOD FOR GRANTING ACCESS TO A CONTROL UNIT IN A BUILDING CONTROL SYSTEM
PROCÉDÉ D'OCTROI D'UN DROIT D'ACCÈS À UNE UNITÉ DE COMMANDE DANS UN SYSTÈME DE COMMANDE DE BÂTIMENT

(43) Veröffentlichungstag der Anmeldung: 22.02.2023
(73) Patentinhaber: GIRA GIERSIEPEN GmbH & Co. KG, 42477 Radevormwald (DE)
(72) Erfinder: Knispel, Detlef, 58089 Hagen (DE); Albuschat, Daniel, 42499 Hückeswagen (DE)
(74) Vertreter: Angerhausen, Christoph

(56) Entgegenhaltungen:
- EP-A1- 2 509 275
- EP-A2- 2 750 352
- WO-A1-2018/198036
- US-A1- 2020 007 323

## Beschreibung

Die Erfindung betrifft ein Verfahren für die Erteilung eines Zugriffsrechts auf eine Steuereinheit in einem Gebäudesteuerungssystem.

Bei digital verbundenen Zugangskontrollsystemen, bei denen sich mittels einer auf einem mobilen Endgerät, beispielsweise einem Smartphone, installierten App der Zugang öffnen oder freigeben lässt, muss ein Zugriffsrechtesystem implementiert werden, um steuern zu können, welches Smartphone mit der App Zugang erlangt, und welches nicht. Dieses Zugriffsrechtesystem kann mittels "digitaler Schlüssel" implementiert werden, bei dem einer Smartphone-App von einer berechtigten Person ein digitaler Schlüssel übermittelt wird.

Aus der EP 2 509 275 A1 ist ein Verfahren bekannt, welches Sätze von Authentifizierungscodes verwendet, um eine bestimmte Einheit zu authentifizieren. Ein weiteres Verfahren für den Verbindungsaufbau zwischen drahtlosen Geräten ist bereits bekannt aus der Druckschrift US 2015/0373760 A1.

Gängige Verfahren der Übermittlung von digitalen Schlüsseln sind außerdem das Senden eines Hyperlinks, oder das Übermitteln eines Codes, worüber sich ein digitaler Schlüssel erlangen lässt oder mittels mündlicher oder schriftlicher Übertragung mit beliebigen Mitteln.

Es ist außerdem denkbar, einen Code oder einen digitalen Schlüssel über durch iOS oder Android bereitgestellte Betriebssystem-Funktionen zu übersenden, wobei jedoch die sendende App für den Vorgang des Übertragens keinen sicheren Kanal und das Verifizieren des korrekten Empfängers gewährleisten kann. Diese Übermittlung soll möglichst komfortabel und sicher sein, was prinzipiell sich zuwiderlaufende Eigenschaften sind. Ein übliches Mittel der Übertragung von Informationen von einer Smartphone-App in die andere ist beispielsweise das Versenden eines Links oder Zugangscodes, der die benötigten Informationen beinhaltet, um einen Zugang zu erhalten. Dieses Versenden stellt eine technische Herausforderung dar, da der Sendende eindeutige und sichere Merkmale kennen muss, um den gewünschten Empfänger zu identifizieren. Diese sind häufig in Form der "Kontaktliste" in gängigen Smartphone-Betriebssystemen vorhanden, jedoch dürfen Smartphone-Apps aus Datenschutzgründen zumeist nicht auf diese Informationen zugreifen. Deshalb muss eine Smartphone-App die gewünschte Nachricht zunächst an das Smartphone-Betriebssystem übergeben, welches dann die Aufgabe des Versendens übernimmt. Ob der gewählte Kanal nun sicher und der Empfänger richtig ist, kann seitens der Smartphone-App selbst jetzt nicht mehr verifiziert werden.

Die der vorliegenden Erfindung zugrundeliegende Idee ist daher, dass als Übertragungsweg kein vom Smartphone-Betriebssystem angebotener Kanal gewählt wird, sondern ein physikalischer. Daher sieht eine Ausführungsform vor, dass auf dem Display des Smartphones des Versenders die Nachricht in Form eines QR-Codes dargestellt wird und der Empfänger diesen QR-Code nun mit seinem eigenen Smartphone abscannen kann.

Es ist daher die Aufgabe der Erfindung, das Herstellen einer Nahfeldkommunikationsverbindung zwischen zumindest einem mobilen Endgerät und zumindest einer Steuereinheit zu vereinfachen.

Diese Aufgabe wird gelöst mit den Merkmalen des unabhängigen Anspruchs. Die abhängigen Ansprüche betreffen jeweils vorteilhafte Ausführungsformen der Erfindung.

Demgemäß wird ein Verfahren für die Erteilung eines Zugriffsrechts auf eine Steuereinheit in einem Gebäudesteuerungssystem vorgeschlagen, aufweisend die Schritte:
Herstellen einer Nahfeldkommunikationsverbindung zwischen einem ersten mobilen Endgerät und der Steuereinheit;
Erzeugen eines der Steuereinheit zugeordneten digitalen Zugangsschlüssels mittels des ersten mobilen Endgeräts, wobei der digitale Zugangsschlüssel eine der Steuereinheit zugeordnete kryptografische Signatur aufweist, welche eindeutig die Herkunft des digitalen Zugangsschlüssels der Steuereinheit zuordnet;
Nach dem Herstellen der autorisierten Nahfeldkommunikationsverbindung: Erzeugen eines dem digitalen Zugangsschlüssel mittelbar der unmittelbar zugeordneten maschinenlesbaren Codes mittels des ersten mobilen Endgeräts;
Darstellen des maschinenlesbaren Codes auf einem Display des ersten mobilen Endgeräts;
Optisches Auslesen des maschinenlesbaren Codes vom Display des ersten mobilen Endgeräts mittels eines zweiten mobilen Endgeräts;
Erhalten des digitalen Zugangsschlüssels durch das zweite mobile Endgerät;
Herstellen einer Nahfeldkommunikationsverbindung zwischen dem zweiten mobilen Endgerät und der Steuereinheit mittels des digitalen Zugangsschlüssels.

Durch die Erfindung werden mehrere technische und sicherheitsrelevante Probleme gelöst:
1) Der Empfänger ist verifiziert, da er physikalisch neben der sendenden Person stehen muss.
2) Die Nachricht wird sicher übermittelt, da der Übermittlungskanal "abhörsicher" ist.
3) Durch das Abscannen des Codes vom Display des einen mobilen Endgeräts ist sichergestellt, dass kein unsicherer Kanal für die Übermittlung genutzt wird.
4) Der Versender kann sicherstellen, dass die Nachricht beim Empfänger angekommen ist und verarbeitet wurde, weil sie für den Vorgang unmittelbar nebeneinanderstehen müssen.
5) Es kann vorgesehen sein, dass die Nachricht nicht auf dem Smartphone des Empfängers verweilt, weshalb kein Risiko besteht, dass eine nicht autorisierte Person einen auf das Smartphone erlangten Zugriff nutzt, um sich Zugriff auf das Zugangskontrollsystem zu ermöglichen.

Es kann insbesondere vorgesehen sein, dass das Verfahren im Rahmen einer programmierbaren Anwendung, insbesondere einer Smartphone App, auf den mobilen Endgeräten ausgeführt wird. Dabei kann vorgesehen sein, dass auf beiden mobilen Endgeräten, d. h. auf der Senderseite wie auch auf der Empfängerseite, dieselbe App installiert ist, welche sowohl in der Lage ist, sowohl ein Zugriffsrecht zu erteilen bzw. zu versenden, als auch ein Zugriffsrecht zu erhalten. Alternativ kann vorgesehen sein, dass die einzelnen auf den unterschiedlichen mobilen Endgeräten ausgeführten Verfahrensschritte im Rahmen von unterschiedlichen auf den jeweiligen mobilen Endgeräten installierten programmierbaren Anwendungen, bzw. Apps ausgeführt werden.

Es kann vorgesehen sein, dass das Gebäudesteuerungssystem ein zentrales Zugangskontrollsystem aufweist, welches den Zugriff auf alle oder mehrere dem Gebäudesteuerungssystem zugeordneten technischen Einrichtungen bzw. deren Steuereinrichtungen erlaubt. Alternativ kann vorgesehen sein, dass für alle einzelnen technischen Einrichtungen oder unter Gruppierungen davon jeweils separate Zugriffsrechte notwendig sind. Dadurch können beispielsweise für die Steuerung einer Heizungsanlage oder einer Jalousie entweder gemeinsame oder separate Zugriffsrechte übertragen werden.

Die Nahfeldkommunikationsverbindung zwischen dem ersten mobilen Endgerät und der Steuereinheit bzw. zwischen dem zweiten mobilen Endgerät und der Steuereinheit kann beispielsweise eine Bluetooth-Verbindung sein. Das mobile Endgerät kann beispielsweise ein Smartphone oder ein Tablet oder aber auch ein Laptop sein. Als Steuereinheit im Gebäudesteuerungssystem kann jede Steuereinheit für alle erdenklichen ansteuerbaren technischen Geräte im Gebäudeumfeld infrage kommen, wie beispielsweise die Steuerung von Licht, die Steuerung der Heizung oder die Steuerung der Jalousien etc.

Der digitale Zugangsschlüssel kann dazu ausgebildet sein, dem Inhaber Zugang zu einer oder mehreren Steuereinheiten des Gebäudesteuerungssystems zu verschaffen. Dem digitalen Schlüssel können auch eingeschränkte "Rechte" zugeordnet werden, über die z.B. nur Teile der Anlage gesteuert oder nur bestimmte Steuerungsbefehle ermöglicht werden können.

Der maschinenlesbare Code kann insbesondere einen QR-Code sein. Der maschinenlesbare Code kann einen Hyperlink enthalten, welcher unmittelbar auf den digitalen Schlüssel verweist, sodass der maschinenlesbare Code unmittelbar dem digitalen Zugangsschlüssel zugeordnet ist. Der maschinenlesbare Code kann alternativ einen Hyperlink enthalten, welcher nur mittelbar auf den digitalen Schlüssel verweist, indem der Hyperlink lediglich auf einen den digitalen Schlüssel eindeutig identifizierenden Code verweist, mittels welchem der digitale Zugangsschlüssel in einer übergeordneten Speichereinrichtung, beispielsweise einer Cloud, eingelöst werden kann.

Das optische Auslesen des maschinenlesbaren Codes kann insbesondere das Scannen des Codes vom Display des ersten mobilen Endgeräts durch das zweite mobile Endgerät umfassen. Das Scannen kann dabei insbesondere mit einer Kamerafunktion des zweiten mobilen Endgeräts erfolgen und beispielsweise als Funktion in die das Verfahren ausführende Smartphone App eingebettet sein.

Es kann vorgesehen sein, dass die Nahfeldkommunikationsverbindung aktiv ist, während der digitale Zugangsschlüssel mittels des ersten mobilen Endgeräts erzeugt wird. Es kann weiterhin vorgesehen sein, dass eine bereits einmal zwischen dem ersten mobilen Endgerät und der Steuereinheit hergestellte Nahfeldkommunikationsverbindung bereits wieder deaktiviert wurde, wenn der digitale Zugangsschlüssel mittels des ersten mobilen Endgeräts erzeugt wird. Der Vorteil der zweiten Alternative besteht darin, dass bei der Erstellung des Schlüssels keine aktive Nahfeldverbindung (z.B. über Bluetooth) mit dem Zutrittskontrollsystem bzw. der Steuereinheit nötig ist.

Dadurch, dass der digitale Zugangsschlüssel eine der Steuereinheit zugeordnete kryptografische Signatur aufweist, welche eindeutig die Herkunft des digitalen Zugangsschlüssels der Steuereinheit zuordnet, kann validiert werden, dass der digitale Schlüssel definitiv von dem Zutrittskontrollsystem, an dem sich später damit Zutritt verschafft werden möchte, ausgegeben wurde.

Es kann vorgesehen sein, dass das Verfahren ferner umfasst: Nach dem Erhalten des digitalen Zugangsschlüssels durch das zweite mobile Endgerät: lokales Speichern des digitalen Zugangsschlüssels auf dem zweiten mobilen Endgerät. Nach dem Speichern des digitalen Zugangsschlüssels auf dem zweiten mobilen Endgerät kann der digitale Schlüssel vom zweiten mobilen Endgerät bzw. von der auf diesem installierten App benutzt werden, um im Zutrittskontrollsystem Anfragen zu stellen, um Zutritt zu erhalten.

Das Verfahren kann ferner umfassen:
Erzeugen des dem digitalen Zugangsschlüssel unmittelbar zugeordneten maschinenlesbaren Codes mittels des ersten mobilen Endgeräts in einer Textform, wie base64 oder hex-Kodierung. Diese Kodierung kann notwendig sein, damit der digitale Schlüssel in einem Hyperlink enthalten sein kann. Im Rahmen der auf dem ersten mobilen Endgerät installierbaren programmierbaren Anwendungen erstellt diese den den Hyperlink beinhaltenden QR-Code, welcher wiederum beim Auslesen das zweite mobile Endgerät des Empfängers dazu anweist, den digitalen Schlüssel in die programmierbare Anwendung auf dem zweiten mobilen Endgerät zu übertragen. Dazu können sogenannte "Deep Links" verwendet werden, die beispielsweise von den Smartphone-Betriebssystemen iOS und Android angeboten werden.

Es kann vorgesehen sein, dass das erste mobile Endgerät eine Berechtigung erhält, insbesondere in Form eines x.509-Zertifikats, zur Ausstellung zumindest eines digitalen Zugangsschlüssels, während die Nahfeldkommunikationsverbindung aktiv ist. Diese Berechtigung bzw. "Vollmacht zur Ausstellung digitaler Schlüssel" ist notwendig, wenn die Nahfeldkommunikationsverbindung zwischen dem ersten mobilen Endgerät und der Steuereinheit beim Ausstellen des digitalen Schlüssels bereits deaktiviert wurde. Mit dieser Vollmacht ist es dem ersten mobilen Endgerät ermöglicht, beispielsweise im Rahmen der programmierbaren Anwendung, bzw. der Smartphone App, bei deaktivierter Nahfeldkommunikationsverbindung einen digitalen Schlüssel zu erstellen, welcher von der Vollmacht digital unterschrieben ist.

Es kann ferner vorgesehen sein, dass das Verfahren umfasst:
Vor dem Herstellen einer Nahfeldkommunikationsverbindung zwischen dem zweiten mobilen Endgerät und der Steuereinheit:
Prüfen der Berechtigung zur Ausstellung des digitalen Zugangsschlüssels durch die Steuereinheit. Dadurch kann die Steuereinheit bzw. das Zutrittskontrollsystem die Gültigkeit der Vollmacht überprüfen, mit der der digitale Schlüssel unterschrieben worden ist, bevor ein Zutritt zum Zutrittskontrollsystem bzw. der Steuereinheit gewährt wird. Der digitale Schlüssel beinhaltet kryptografisch einen Verweis auf die Berechtigung, z.B. des x.509-Zertifikats bzw. des darin enthaltenen "Public Keys".

Das Verfahren kann weiterhin umfassen:
Nach dem Erzeugen des der Steuereinheit zugeordneten digitalen Zugangsschlüssels mittels des ersten mobilen Endgeräts: Übersenden des erzeugten digitalen Zugangsschlüssels von dem ersten mobilen Endgerät an eine übergeordnete Speichereinrichtung, auf welche das erste und das zweite mobile Endgerät zugreifen können;

Prüfen der Gültigkeit der Berechtigung zur Ausstellung des digitalen Zugangsschlüssels in der übergeordneten Speichereinrichtung und Speichern des digitalen Zugangsschlüssels in der übergeordneten Speichereinrichtung bei Feststellen der Gültigkeit.

Die übergeordnete Speichereinrichtung kann eine Cloud sein, welche ein von dem ersten mobilen Endgerät und dem zweiten mobilen Endgerät erreichbares System ist, welches eine HTTP-Schnittstelle zur Verfügung stellt, um digitale Schlüssel zwischen dem Sender und dem Empfänger zu transportieren. Der Sender kann den digitalen Schlüssel an die Cloud senden, wo die Gültigkeit der Vollmacht geprüft und bei erfolgreicher Prüfung der digitale Schlüssel sicher abgelegt und mit einem "Code" referenziert wird. Der "Code" wird an die Sender App, bzw. an die auf dem ersten mobilen Endgerät installierte programmierbare Anwendung, zurückgesendet und identifiziert den digitalen Schlüssel eindeutig. Der "Code" kann eine nicht mit heute oder in absehbarer Zukunft verfügbaren technischen Mitteln "erratbare'" (Brute Force) eindeutige Kennung sein, mittels der sich die Empfänger App, bzw. die auf dem zweiten mobilen Endgerät installierte programmierbare Anwendung, den tatsächlichen digitalen Schlüssel von der Cloud abrufen kann.

Somit kann das Verfahren ferner umfassen:
Referenzieren des digitalen Schlüssels mittels eines diesen eindeutig identifizierenden Codes und Übersenden des Codes an das erste mobile Endgerät;
Erzeugen des dem digitalen Zugangsschlüssel mittelbar zugeordneten maschinenlesbaren Codes mittels des den digitalen Schlüssel eindeutig identifizierenden Codes.

Außerdem kann das Verfahren umfassen:
Nach dem optischen Auslesen des dem digitalen Zugangsschlüssel mittelbar zugeordneten maschinenlesbaren Codes durch das zweite mobile Endgerät:
Erhalten des den digitalen Schlüssel eindeutig identifizierenden Codes durch das zweite mobile Endgerät;
Einlösen des den digitalen Schlüssel eindeutig identifizierenden Codes in der übergeordneten Speichereinrichtung, dabei Übermittlung von Merkmalen, welche das zweite mobile Endgerät eindeutig identifizieren;
Danach Erhalten des digitalen Zugangsschlüssels durch das zweite mobile Endgerät.

Es kann vorgesehen sein, dass nach Erhalt des Zugangsschlüssels durch das zweite mobile Endgerät der den digitalen Zugangsschlüssel eindeutig identifizierende Code in der übergeordneten Speichereinrichtung für eine weitere Nutzung gesperrt wird.

Ferner kann vorgesehen sein, dass der digitale Zugangsschlüssel eindeutig dem zweiten mobilen Endgerät zugeordnet wird, so dass dieser ausschließlich durch das zweite mobile Endgerät nutzbar ist.

Außerdem kann das Verfahren umfassen:
Nach Erhalten des digitalen Zugangsschlüssels durch das zweite mobile Endgerät: Bereitstellen einer Benachrichtigung an das erste mobile Endgerät, betreffend das erfolgreiche Erhalten des digitalen Zugangsschlüssels durch das zweite mobile Endgerät.

Danach kann der digitale Schlüssel von der Empfänger-App bzw. von der programmierbaren Anwendung des zweiten mobilen Endgeräts benutzt werden, um im Zutrittskontrollsystem bzw. der Steuereinheit Anfragen zu stellen, um Zutritt zu erhalten.

Das optische Auslesen kann ferner umfassen:
Öffnen einer Website, welche in dem maschinenlesbaren Code als Hyperlink enthalten ist. Es kann vorgesehen sein, dass das Auslesen des QR-Codes das Öffnen der Website automatisch triggert.

Ferner kann vorgesehen sein, dass der Hyperlink einen Befehl aufweist, welcher das zweite mobile Endgerät dazu anweist, den den digitalen Schlüssel eindeutig identifizierenden Code oder den digitalen Schlüssel in einen mit dem zweiten mobilen Endgerät verknüpften Speicher zu übertragen.

Beispielhafte Ausführungsformen der Erfindung werden anhand der nachfolgenden Figuren erläutert. Dabei zeigt:

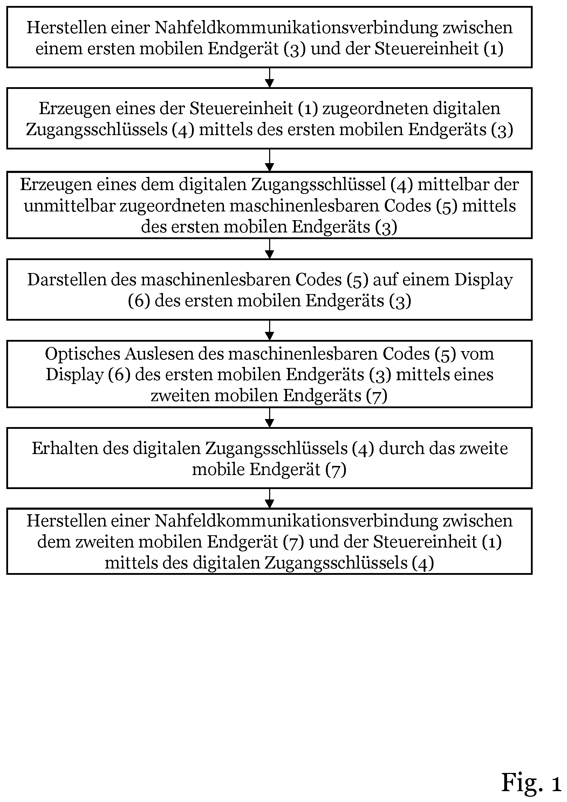

Fig.1 ein beispielhaftes Ausführungsbeispiel des erfindungsgemäßen Verfahrens.

Fig. 1 zeigt beispielhaft den Ablauf des erfindungsgemäßen Verfahrens für die Erteilung eines Zugriffsrechts auf eine Steuereinheit 1 in einem Gebäudesteuerungssystem 2, in der Darstellung eines Ablaufdiagramms. Dabei wird in einem ersten Schritt eine Nahfeldkommunikationsverbindung zwischen einem ersten mobilen Endgerät (3) und einer Steuereinheit 1 des Gebäudesteuerungssystems 2 hergestellt. Dadurch verfügt das erste mobile Endgerät 3 über ein erstmalig erteiltes Zugriffsrecht auf die betreffende Steuereinheit 1.

Im nachfolgenden Schritt kann es je nach Ausführungsform notwendig sein, die Nahfeldkommunikationsverbindung aufrechtzuerhalten. Andernfalls kann die Nahfeldkommunikationsverbindung zwischen dem ersten mobilen Endgerät 3 und der Steuereinheit 1 beendet werden. In einem zweiten Schritt des Verfahrens erfolgt das Erzeugen eines der Steuereinheit 1 zugeordneten digitalen Zugangsschlüssels 4 mittels des ersten mobilen Endgeräts 3. Hierzu muss das erste mobile Endgerät 3 entweder über eine Vollmacht zur Ausstellung digitaler Schlüssel bzw. eine Berechtigung dazu verfügen, oder der erzeugte digitale Schlüssel muss eine kryptografische Signatur von der Steuereinheit erhalten.

Im nachfolgenden dritten Schritt des Verfahrens erfolgt das Erzeugen eines dem digitalen Zugangsschlüssel 4 mittelbar der unmittelbar zugeordneten maschinenlesbaren Codes 5 mittels des ersten mobilen Endgeräts 3. Je nach Ausführungsbeispiel ist der maschinenlesbaren Code dem digitalen Zugangsschlüssel dabei mittelbar oder unmittelbar zugeordnet. Bei einer mittelbaren Zuordnung führt der in den maschinenlesbaren Code eingebettete Hyperlink zu einem Code mittels welchem der digitale Schlüssel referenziert ist und welcher den digitalen Schlüssel eindeutig identifiziert. Bei einer unmittelbaren Zuordnung führt der in den maschinenlesbaren Code eingebettete Hyperlink unmittelbar zum digitalen Schlüssel.

Im nachfolgenden vierten Schritt des Verfahrens erfolgt das Darstellen des maschinenlesbaren Codes 5 auf einem Display 6 des ersten mobilen Endgeräts 3. Die Darstellung kann dabei insbesondere in Form eines QR-Codes erfolgen, welcher den Hyperlink beinhaltet, der das Smartphone des Empfängers bzw. das zweite mobile Endgerät dazu anweist, den Code an dieses zu übertragen.

Im nachfolgenden fünften Schritt des Verfahrens erfolgt ein optisches Auslesen des maschinenlesbaren Codes 5 vom Display 6 des ersten mobilen Endgeräts 3 mittels des zweiten mobilen Endgeräts 7. Hierzu startet der Empfänger des digitalen Schlüssels auf seinem Smartphone eine Scannerfunktion zum Scannen eines QR-Codes, welche beispielsweise in die programmierbare Anwendung zur Ausführung des Verfahrens eingebettet sein kann. Der Empfänger justiert sein Smartphone so, dass die Scanner App den QR-Code vom Bildschirm des ersten mobilen Endgeräts abscannen und den darin enthaltenen "Deep Link" öffnen kann.

Im nachfolgenden sechsten Schritt des Verfahrens erfolgt das Erhalten des digitalen Zugangsschlüssels 4 durch das zweite mobile Endgerät 7. Je nach Ausführungsbeispiel löste Empfänger entweder zunächst den Code in der Cloud ein und übermittelt dabei eindeutige Merkmale, die die Smartphone App bzw. die programmierbare Anwendung, welche auf dem zweiten mobilen Endgerät installiert ist identifiziert, oder die den Empfänger selbst als Person identifizieren, oder die das zweite mobile Endgerät identifizieren, um nach dem Einlösen des Codes von der Cloud den vom Empfänger erstellten digitalen Schlüssel zu erhalten. Dabei wurde der digitale Schlüssel von der Cloud mit kryptografischen Mitteln signiert, um zu beweisen, dass er von der "richtigen Cloud" stammt. Oder es kann vorgesehen sein, dass das erhalten des digitalen Schlüssels durch das zweite mobile Endgerät dadurch erfolgt, dass der digitale Schlüssel unmittelbar durch Öffnen des in dem QR-Code enthaltenen "Deep Links" erhalten wird. In diesem Fall wird der digitale Schlüssel lokal auf dem Smartphone abgespeichert.

**Im** nachfolgenden siebten und letzten Schritt erfolgt das Herstellen einer Nahfeldkommunikationsverbindung zwischen dem zweiten mobilen Endgerät (7) und der Steuereinheit 1 mittels des digitalen Zugangsschlüssels 4. Dadurch ist dann auch das zweite mobile Endgerät in der Lage, gemäß dem erfindungsgemäßen Verfahren digitale Schlüssel an weitere mobile Endgeräte zu verteilen.

Ein erstes Ausführungsbeispiel A betrifft eine zentralisierte, Cloud-basierte Implementierung, welche ortsunabhängig funktioniert. Das Ausführungsbeispiel A weist folgende Komponenten auf:
- Ein Zutrittskontrollsystem: Ein technisches System, das Zutritt zu einem Objekt oder zu einer technischen Einrichtung für autorisierte Personen gewähren kann. Dabei kann der Zutritt neben anderen Methoden auch per autorisierter Smartphone App gewährt werden.
- Einen Sender: Die Person beziehungsweise deren mobiles Endgerät, welches einen digitalen Schlüssel an einen Empfänger beziehungsweise an dessen mobiles Endgerät versenden möchte. Der Sender muss über einen Mechanismus die Autorisierung erhalten haben, digitale Schlüssel für das Zutrittskontrollsystem erstellen zu dürfen.
- Eine auf einem mobilen Endgerät ausführbare und/oder installierbare Anwendung, beispielsweise eine App: Eine Smartphone App, die das Erstellen, Versenden, Empfangen und Nutzen eines digitalen Schlüssels für das Zutrittskontrollsystem ermöglicht.
- Eine auf dem mobilen Endgerät des Senders ausgeführte und/oder installierte Anwendung, beispielsweise eine Sender App: Die konkrete Installation/Instanz der App auf einem Smartphone des Senders.
- Einen Empfänger: Die Person beziehungsweise deren mobiles Endgerät, für das der Sender einen digitalen Schlüssel ausstellen möchte, um dem Empfänger Zutritt zu gewähren.
- Eine Empfänger-App: Die konkrete Installation/Instanz der App auf einem Smartphone des Empfängers.
- Eine Scanner-App: Eine App auf dem Smartphone des Empfängers, die es erlaubt, einen maschinenlesebaren Code, insbesondere einen QR-Code, zu scannen, und eine etwaige Webseite, die in dem QR-Code als Hyperlink enthalten ist, zu öffnen.
- Eine Cloud: Ein von der Sender App und Empfänger App erreichbares System, das eine HTTP-Schnittstellte zur Verfügung stellt, um digitale Schlüssel zwischen Sender und Empfänger zu transportieren.

### Beschreibung des Ausführungsbeispiels A:

Die Sender App muss im Vorfeld eine authentifizierte Nahfeldverbindung (z.B. Bluetooth) mit Authentifizierung mit dem Zutrittskontrollsystem aufgebaut und eine "Vollmacht zur Ausstellung digitaler Schlüssel", z.B. in Form eines x.509-Zertifikats, erhalten haben.

Der Sender stellt in der Sender App einen digitalen Schlüssel aus, der von der Vollmacht digital unterschrieben ist, und möchte diesen an einen Empfänger übertragen. Für diesen Schritt wird keine aktive Nahfeldverbindung zum Zutrittssystem benötigt, da die Vollmacht auf dem ersten mobilen Endgerät abgespeichert ist und alle nötigen kryptografischen Merkmale enthält, um das Unterschreiben des digitalen Schlüssels durchzuführen.

Der Sender sendet diesen digitalen Schlüssel an die Cloud, wo die Gültigkeit der Vollmacht geprüft und bei erfolgreicher Prüfung dieser sicher abgelegt und mit einem "Code" referenziert wird. Der "Code" wird an die Sender App zurückgesendet und identifiziert den digitalen Schlüssel eindeutig. Der Code ist eine nicht mit heute oder in absehbarer Zukunft verfügbaren technischen Mitteln "erratbare'" (Brute Force) eindeutige Kennung, mittels der sich die Empfänger App den tatsächlichen digitalen Schlüssel von der Cloud abrufen kann.

Die Sender App erstellt einen QR-Code, der einen Hyperlink beinhaltet, der das Smartphone des Empfängers dazu anweist, den Code in die Empfänger App zu übertragen. Dazu werden sogenannte "Deep Links" verwendet, die z.B. von den Smartphone-Betriebssystemen iOS und Android angeboten werden.

Der Empfänger startet auf seinem Smartphone die Scanner App. Das kann eine beliebige App zum Scannen eines QR-Codes sein - diese kann auch die Empfänger App sein, muss es aber nicht.

Der Empfänger justiert sein Smartphone so, dass die Scanner App den QR-Code vom Bildschirm der Sender App abscannen und den darin enthaltenen "Deep Link" öffnen kann. Dadurch wird die Empfänger App gestartet und der Code übergeben. Mit dem zweiten Gerät wird demnach der Code vom ersten Gerät gescannt und verarbeitet und der Empfänger App zur Verfügung gestellt. Sollte die Empfänger App zu diesem Zeitpunkt noch nicht auf dem zweiten Gerät installiert sein, kann vorgesehen sein, dass die App automatisch vor der Einrichtung des Schlüssels installiert wird.

Die Empfänger App löst den Code in der Cloud ein und übermittelt dabei eindeutige Merkmale, die die Empfänger App identifizieren.

Die Cloud übermittelt den vom Empfänger erstellten digitalen Schlüssel an die Empfänger App. Der digitale Schlüssel wurde von der Cloud mit kryptografischen Mitteln signiert, um zu beweisen, dass er von der "richtigen Cloud" stammt.

Die Cloud führt zusätzlich weitere Aktionen aus:
- Der Code wird für die weitere Nutzung gesperrt.
- Der digitale Schlüssel wird der Empfänger App zugeordnet und kann fortan nur von dieser Empfänger App benutzt werden.
- Optional wird der Sender darüber benachrichtigt, dass der digitale Schlüssel erfolgreich beim Empfänger angekommen ist.

Nun kann der digitale Schlüssel von der Empfänger App benutzt werden, um im Zutrittskontrollsystem Anfragen zu stellen, um Zutritt zu erhalten.

Die Implementierung des zentralisierten, Cloud-basierten Ausführungsbeispiels A weist eine Reihe an Vorteilen auf:
- Bei der Erstellung des Schlüssels ist keine aktive Nahfeldverbindung (z.B. über Bluetooth) mit dem Zutrittskontrollsystem nötig.
- Schlüssel werden an die Empfänger App gebunden, so dass sie nicht zwischengespeichert und auf beliebig vielen Smartphones wiederverwendet werden können.
- Die Sender App kann eine Benachrichtigung über den Empfang des digitalen Schlüssels erhalten - was der Sender in Person zwar auf Grund der erforderlichen Nähe durchaus ebenfalls wahrnehmen kann, aber das technische System kann Information darüber erlangen, ob ein digitaler Schlüssel empfangen wurde, und auf wie vielen Smartphones.
- Die kryptografische Sicherheit ist nicht auf das Zutrittskontrollsystem verlagert, auf das physischen Zugriff besteht. Deshalb sind die Chancen gering, dass die benutzten kryptografischen Schlüssel durch "tampering" erhalten werden können. Damit wäre eine unbemerkte Erstellung von beliebigen digitalen Schlüsseln nur sehr schwer möglich.

Ein zweites Ausführungsbeispiel B betrifft eine Zutrittskontrollsystem-zentrierte, nichtortsunabhängige Implementierung. Das Ausführungsbeispiel B weist folgende Komponenten auf:
- Ein Zutrittskontrollsystem: Ein technisches System, das Zutritt zu einem Objekt oder zu einer technischen Einrichtung für autorisierte Personen gewähren kann. Dabei kann der Zutritt neben anderen Methoden auch per autorisierter Smartphone App gewährt werden.
- Einen Sender: Die Person beziehungsweise deren mobiles Endgerät, welches einen digitalen Schlüssel an einen Empfänger beziehungsweise an dessen mobiles Endgerät versenden möchte. Der Sender muss über einen Mechanismus die Autorisierung erhalten haben, digitale Schlüssel für das Zutrittskontrollsystem erstellen zu dürfen.
- Eine auf einem mobilen Endgerät ausführbare und/oder installierbare Anwendung, beispielsweise eine App: Eine Smartphone App, die das Erstellen, Versenden, Empfangen und Nutzen eines digitalen Schlüssels für das Zutrittskontrollsystem ermöglicht.
- Eine auf dem mobilen Endgerät des Senders ausgeführte und/oder installierte Anwendung, beispielsweise eine Sender App: Die konkrete Installation/Instanz der App auf einem Smartphone des Senders.
- Einen Empfänger: Die Person beziehungsweise deren mobiles Endgerät, für das der Sender einen digitalen Schlüssel ausstellen möchte, um dem Empfänger Zutritt zu gewähren.
- Eine Empfänger-App: Die konkrete Installation/Instanz der App auf einem Smartphone des Empfängers.
- Eine Scanner-App: Eine App auf dem Smartphone des Empfängers, die es erlaubt, einen maschinenlesebaren Code, insbesondere einen QR-Code, zu scannen, und eine etwaige Webseite, die in dem QR-Code als Hyperlink enthalten ist, zu öffnen.

### Beschreibung des Ausführungsbeispiels B:

Die Sender App stellt eine authentifizierte Nahfeldverbindung zum Zutrittskontrollsystem her und lässt sich einen digitalen Schlüssel ausstellen und empfängt diesen, um ihn an einen Empfänger zu übertragen.

Der digitale Schlüssel muss eine kryptografische Signatur vom Zutrittskontrollsystem enthalten, so dass validiert werden kann, dass dieser definitiv von dem Zutrittskontrollsystem, an dem sich später damit Zutritt verschafft werden möchte, ausgegeben wurde.

Die Sender App erstellt einen QR-Code, der einen Hyperlink beinhaltet, der das Smartphone des Empfängers dazu anweist, den digitalen Schlüssel in die Empfänger App zu übertragen. Dazu werden sogenannte "Deep Links" verwendet, die z.B. von den Smartphone-Betriebssystemen iOS und Android angeboten werden. Damit der digitale Schlüssel in einem Hyperlink enthalten sein kann, kann er bei Bedarf über übliche Mittel in reine Textform gebracht werden, wie beispielsweise base64 oder hex-kodierung.

Der Empfänger startet auf seinem Smartphone eine Scanner App. Das kann eine beliebige App zum Scannen eines QR-Codes sein - diese kann auch die Empfänger App sein, muss es aber nicht. Der Empfänger justiert sein Smartphone so, dass die Scanner App den QR-Code vom Bildschirm der Sender App abscannen und den darin enthaltenen "Deep Link" öffnen kann.

Dadurch wird die Empfänger App gestartet und der digitale Schlüssel übergeben. Die Empfänger App speichert den digitalen Schlüssel lokal auf dem Smartphone ab.

Nun kann der digitale Schlüssel von der Empfänger App benutzt werden, um im Zutrittskontrollsystem Anfragen zu stellen, um Zutritt zu erhalten.

Das Ausführungsbeispiel B einer Zutrittskontrollsystem-zentrierten, nichtortsunabhängigen Implementierung weist folgende Vorteile auf:
- Es wird keine aktive Internetverbindung benötigt.
- Es ist nicht möglich, über "tampering" Mittel zu erlangen, mit denen Schlüssel für andere Zutrittskontrollsysteme erstellt werden könnten.

Ein drittes Ausführungsbeispiel C betrifft eine dezentralisierte, ortsunabhängige Implementierung.

Das Ausführungsbeispiel C weist folgende Komponenten auf:
- Zutrittskontrollsystem: Ein technisches System, das Zutritt zu einem Objekt für autorisierte Personen gewähren kann. Der Zutritt kann neben anderen Methoden auch per autorisierter Smartphone App gewährt werden.
- Sender: Die Person, die einen digitalen Schlüssel an einen Empfänger versenden möchte. Die Person muss über einen nicht in dieser Erfindung beschriebenen Mechanismus die Autorisierung erhalten haben, digitale Schlüssel für das Zutrittskontrollsystem erstellen zu dürfen.
- App: Eine Smartphone App, die das Erstellen, Versenden, Empfangen und Nutzen eines digitalen Schlüssels für das Zutrittskontrollsystem ermöglicht.
- Sender App: Die konkrete Installation/Instanz der App auf einem Smartphone des Senders.
- Empfänger: Die Person, für die der Sender einen digitalen Schlüssel ausstellen möchte, um ihr Zutritt zu gewähren.
- Empfänger App: Die konkrete Installation/Instanz der App auf einem Smartphone des Empfängers.
- Scanner App: Eine App auf dem Smartphone des Empfängers, die es erlaubt, einen QR-Code zu scannen und eine etwaige Webseite, die in dem QR-Code als Hyperlink enthalten ist, zu öffnen.
- Cloud: Ein von der Sender App und Empfänger App erreichbares System, das eine HTTP-Schnittstellte zur Verfügung stellt, um Schlüssel zwischen Sender und Empfänger zu transportieren.

### Beschreibung der Erfindung:

Die Sender App muss im Vorfeld eine authentifizierte Nahfeldverbindung (z.B. Bluetooth) mit Authentifizierung mit dem Zutrittskontrollsystem aufgebaut und eine "Vollmacht zur Ausstellung digitaler Schlüssel", z.B. in Form eines x.509-Zertifikats, erhalten haben.

Der Sender stellt in der Sender App einen digitalen Schlüssel aus, der von der Vollmacht digital unterschrieben ist, und möchte diesen an einen Empfänger übertragen. Für diesen Schritt wird keine aktive Nahfeldverbindung zum Zutrittssystem benötigt, da die Vollmacht auf dem ersten mobilen Endgerät abgespeichert ist und alle nötigen kryptografischen Merkmale enthält, um das Unterschreiben des digitalen Schlüssels durchzuführen.

Die Sender App erstellt einen QR-Code, der einen Hyperlink beinhaltet, der das Smartphone des Empfängers dazu anweist, den digitalen Schlüssel in die Empfänger App zu übertragen. Dazu werden sogenannte "Deep Links" verwendet, die z.B. von den Smartphone-Betriebssystemen iOS und Android angeboten werden. Damit der digitale Schlüssel in einem Hyperlink enthalten sein kann, kann er bei Bedarf über übliche Mittel in reine Textform gebracht werden, wie beispielsweise base64 oder hex-kodierung.

Der Empfänger startet auf seinem Smartphone eine Scanner App. Das kann eine beliebige App zum Scannen eines QR-Codes sein - diese kann auch die Empfänger App sein, muss es aber nicht.

Der Empfänger justiert sein Smartphone so, dass die Scanner App den QR-Code vom Bildschirm der Sender App abscannen und den darin enthaltenen "Deep Link" öffnen kann.

Dadurch wird die Empfänger App gestartet und der digitale Schlüssel übergeben. Die Empfänger App speichert den digitalen Schlüssel lokal auf dem Smartphone ab.

Nun kann der digitale Schlüssel von der Empfänger App benutzt werden, um im Zutrittskontrollsystem Anfragen zu stellen, um Zutritt zu erhalten. Das Zutrittskontrollsystem prüft die Gültigkeit der Vollmacht, mit der der digitale Schlüssel unterschrieben worden ist, bevor Zutritt gewährt wird.

Vorteile des Ausführungsbeispiels C der dezentralisierten, ortsunabhängigen Implementierung:
- Es wird keine aktive Internetverbindung benötigt.
- Es ist nicht möglich, über "tampering" Mittel zu erlangen, mit denen Schlüssel für andere Zutrittskontrollsysteme erstellt werden könnten.

Die in der vorstehenden Beschreibung, in den Figuren sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Steuereinheit
- 2: Gebäudesteuerungssystem
- 3: erstes mobiles Endgerät
- 4: digitaler Zugangsschlüssel
- 5: maschinenlesbarer Code
- 6: Display
- 7: zweites mobiles Endgerät
- 8: kryptografische Signatur
- 9: Berechtigung
- 10: übergeordnete Speichereinrichtung
- 11: den digitalen Schlüssel eindeutig identifizierender Code
- 12: Benachrichtigung über das erfolgreiche Erhalten des digitalen Zugangsschlüssels
- 13: Website
- 14: Hyperlink
- 15: mit dem zweiten mobilen Endgerät verknüpften Speicher

## Patentansprüche

1. Verfahren für die Erteilung eines Zugriffsrechts auf eine Steuereinheit (1) in einem Gebäudesteuerungssystem oder Zutrittskontrollsystem (2), aufweisend die Schritte:
Herstellen einer autorisierten Nahfeldkommunikationsverbindung zwischen einem ersten mobilen Endgerät (3) und der Steuereinheit (1);
Erzeugen eines der Steuereinheit (1) zugeordneten digitalen Zugangsschlüssels (4) mittels des ersten mobilen Endgeräts (3), wobei der digitale Zugangsschlüssel (4) eine der Steuereinheit (1) zugeordnete kryptografische Signatur (8) aufweist, welche eindeutig die Herkunft des digitalen Zugangsschlüssels (4) der Steuereinheit (1) zuordnet;
Nach dem Herstellen der autorisierten Nahfeldkommunikationsverbindung: Erzeugen eines dem digitalen Zugangsschlüssel (4) mittelbar oder unmittelbar zugeordneten maschinenlesbaren Codes (5) mittels des ersten mobilen Endgeräts (3);
Darstellen des maschinenlesbaren Codes (5) auf einem Display (6) des ersten mobilen Endgeräts (3);
Optisches Auslesen des maschinenlesbaren Codes (5) vom Display (6) des ersten mobilen Endgeräts (3) mittels eines zweiten mobilen Endgeräts (7);
Erhalten des digitalen Zugangsschlüssels (4) durch das zweite mobile Endgerät (7);
Herstellen einer Nahfeldkommunikationsverbindung zwischen dem zweiten mobilen Endgerät (7) und der Steuereinheit (1) mittels des digitalen Zugangsschlüssels (4).

2. Verfahren nach Anspruch 1, wobei die Nahfeldkommunikationsverbindung aktiv ist, während der digitale Zugangsschlüssel (4) mittels des ersten mobilen Endgeräts (3) erzeugt wird.

3. Verfahren nach einem der Ansprüche 1 oder 2, ferner umfassend:
Nach dem Erhalten des digitalen Zugangsschlüssels (4) durch das zweite mobile Endgerät (7): lokales Speichern des digitalen Zugangsschlüssels (4) auf dem zweiten mobilen Endgerät (7).

4. Verfahren nach einem der Ansprüche 1 bis 3, ferner umfassend:
Erzeugen des dem digitalen Zugangsschlüssel (4) unmittelbar zugeordneten maschinenlesbaren Codes (5) mittels des ersten mobilen Endgeräts (3) in einer Textform, wie base64 oder hex-Kodierung.

5. Verfahren nach Anspruch 1, wobei das erste mobile Endgerät (3) eine Berechtigung (9), insbesondere in Form eines x.509-Zertifikats, zur Ausstellung zumindest eines digitalen Zugangsschlüssels (4) erhält, während die Nahfeldkommunikationsverbindung aktiv ist.

6. Verfahren nach Anspruch 5, ferner umfassend:
Vor dem Herstellen einer Nahfeldkommunikationsverbindung zwischen dem zweiten mobilen Endgerät (7) und der Steuereinheit (1):
Prüfen der Gültigkeit durch die Steuereinheit (1), insbesondere der Berechtigung (9) zur Ausstellung des digitalen Zugangsschlüssels (4).

7. Verfahren nach Anspruch 5, weiter umfassend:
Nach dem Erzeugen des der Steuereinheit (1) zugeordneten digitalen Zugangsschlüssels (4) mittels des ersten mobilen Endgeräts (3): Übersenden des erzeugten digitalen Zugangsschlüssels (4) von dem ersten mobilen Endgerät (3) an eine übergeordnete Speichereinrichtung (10), auf welche das erste und das zweite mobile Endgerät (3, 7) zugreifen können;
Prüfen der Gültigkeit der Berechtigung (9) zur Ausstellung des digitalen Zugangsschlüssels (4) in der übergeordneten Speichereinrichtung (10) und Speichern des digitalen Zugangsschlüssels (4) in der übergeordneten Speichereinrichtung (10) bei Feststellen der Gültigkeit.

8. Verfahren nach Anspruch 7, weiter umfassend:
Referenzieren des digitalen Schlüssels (4) mittels eines diesen eindeutig identifizierenden Codes (11) durch die übergeordnete Speichereinrichtung (10) und Übersenden des Codes (11) an das erste mobile Endgerät (3);
Erzeugen des dem digitalen Zugangsschlüssel (4) mittelbar zugeordneten maschinenlesbaren Codes (5) mittels des den digitalen Schlüssel (4) eindeutig identifizierenden Codes (11).

9. Verfahren nach Anspruch 8, weiter umfassend:
Nach dem optischen Auslesen des dem digitalen Zugangsschlüssel (4) mittelbar zugeordneten maschinenlesbaren Codes (5) durch das zweite mobile Endgerät (7):
Erhalten des den digitalen Schlüssel (4) eindeutig identifizierenden Codes (11) durch das zweite mobile Endgerät (7);
Einlösen des den digitalen Schlüssel (4) eindeutig identifizierenden Codes (11) in der übergeordneten Speichereinrichtung (10), dabei Übermittlung von Merkmalen, welche das zweite mobile Endgerät (7) eindeutig identifizieren;
Danach Erhalten des digitalen Zugangsschlüssels (4) durch das zweite mobile Endgerät (7).

10. Verfahren nach Anspruch 9, wobei nach Erhalt des Zugangsschlüssels (4) durch das zweite mobile Endgerät (7) der den digitalen Zugangsschlüssel (4) eindeutig identifizierende Code (11) in der übergeordneten Speichereinrichtung (10) für eine weitere Nutzung gesperrt wird.

11. Verfahren nach Anspruch 9 oder 10, wobei der digitale Zugangsschlüssel (4) eindeutig dem zweiten mobilen Endgerät (7) zugeordnet wird, so dass dieser ausschließlich durch das zweite mobile Endgerät (7) nutzbar ist.

12. Verfahren nach einem der Ansprüche 9 bis 11, ferner umfassend:
Nach Erhalten des digitalen Zugangsschlüssels (4) durch das zweite mobile Endgerät (7): Bereitstellen einer Benachrichtigung (9) an das erste mobile Endgerät (3), betreffend das erfolgreiche Erhalten des digitalen Zugangsschlüssels (4) durch das zweite mobile Endgerät (7).

13. Verfahren nach einem der vorangehenden Ansprüche, wobei das optische Auslesen ferner umfasst:
Öffnen einer Website (13), welche in dem maschinenlesbaren Code (5) als Hyperlink (14) enthalten ist.

14. Verfahren nach Anspruch 13, wobei der Hyperlink (14) einen Befehl aufweist, welcher das zweite mobile Endgerät (7) dazu anweist, den den digitalen Schlüssel (4) eindeutig identifizierenden Code (11) oder den digitalen Schlüssel (4) in einen mit dem zweiten mobilen Endgerät (7) verknüpften Speicher (15) zu übertragen.

## Claims

1. Method for granting a right of access to a control unit (1) in a building control system or access control system (2), comprising the steps of:
establishing an authorized near-field communication link between a first mobile terminal (3) and the control unit (1);
generating a digital access key (4) assigned to the control unit (1) by means of the first mobile terminal (3), wherein the digital access key (4) has a cryptographic signature (8) assigned to the control unit (1), which uniquely assigns the origin of the digital access key (4) to the control unit (1);
after establishing the authorized near-field communication link: generating a machine-readable code (5) indirectly or directly assigned to the digital access key (4) by means of the first mobile terminal (3);
displaying the machine-readable code (5) on a display (6) of the first mobile terminal (3);
optically reading the machine-readable code (5) from the display (6) of the first mobile terminal (3) by means of a second mobile terminal (7);
obtaining the digital access key (4) by the second mobile terminal (7);
establishing a near-field communication link between the second mobile terminal (7) and the control unit (1) by means of the digital access key (4).

2. The method according to claim 1, wherein the near-field communication link is active while the digital access key (4) is generated by means of the first mobile terminal (3).

3. The method according to any one of claims 1 or 2, further comprising:
after obtaining the digital access key (4) by the second mobile terminal (7): locally storing the digital access key (4) on the second mobile terminal (7).

4. The method according to any one of claims 1 to 3, further comprising:
generating the machine-readable code (5) directly assigned to the digital access key (4) by means of the first mobile terminal (3) in a text form, such as base64 or hex coding.

5. The method according to claim 1, wherein the first mobile terminal (3) obtains an authorization (9), in particular in the form of an x.509 certificate, for issuing at least one digital access key (4) while the near-field communication link is active.

6. The method according to claim 5, further comprising:
before establishing a near-field communication link between the second mobile terminal (7) and the control unit (1):
checking the validity by the control unit (1), in particular the authorization (9) for issuing the digital access key (4).

7. The method according to claim 5, further comprising:
after generating the digital access key (4) assigned to the control unit (1) by means of the first mobile terminal (3): transmitting the generated digital access key (4) from the first mobile terminal (3) to a superordinate storage device (10),
which the first and the second mobile terminal (3, 7) can access;
checking the validity of the authorization (9) for issuing the digital access key (4) in the superordinate storage device (10) and storing the digital access key (4) in the superordinate storage device (10) when determining the validity.

8. The method according to claim 7, further comprising:
referencing the digital key (4) by means of a code (11) uniquely identifying it by the superordinate storage device (10) and transmitting the code (11) to the first mobile terminal (3);
generating the machine-readable code (5) indirectly assigned to the digital access key (4) by means of the code (11) uniquely identifying the digital key (4).

9. The method according to claim 8, further comprising:
after optically reading the machine-readable code (5) indirectly assigned to the digital access key (4) by the second mobile terminal (7):
obtaining the code (11) uniquely identifying the digital key (4) by the second mobile terminal (7);
redeeming the code (11) uniquely identifying the digital key (4) in the superordinate storage device (10), thereby transmitting features which uniquely identify the second mobile terminal (7);
thereafter obtaining the digital access key (4) by the second mobile terminal (7).

10. The method according to claim 9, wherein after obtaining the access key (4) by the second mobile terminal (7) the code (11) uniquely identifying the digital access key (4) in the superordinate storage device (10) is blocked for further use.

11. The method according to claim 9 or 10, wherein the digital access key (4) is uniquely assigned to the second mobile terminal (7), so that it can be used exclusively by the second mobile terminal (7).

12. The method according to any one of claims 9 to 11, further comprising:
after obtaining the digital access key (4) by the second mobile terminal (7): providing a notification (9) to the first mobile terminal (3) regarding the successful obtaining of the digital access key (4) by the second mobile terminal (7).

13. The method according to any one of the preceding claims, wherein the optical reading further comprises:
opening a website (13) which is contained in the machine-readable code (5) as a hyperlink (14).

14. The method according to claim 13, wherein the hyperlink (14) has a command which instructs the second mobile terminal (7) to transfer the code (11) uniquely identifying the digital key (4) or the digital key (4) into a memory (15) linked to the second mobile terminal (7).

## Revendications

1. Procédé pour accorder un droit d'accès à une unité de commande (1) dans
un système de commande de bâtiment ou un système de contrôle d'accès (2), comprenant les étapes suivantes :
établissement d'une connexion de communication en champ proche autorisée entre un premier terminal mobile (3) et l'unité de commande (1) ;
génération d'une clé d'accès numérique (4) attribuée à l'unité de commande (1) à l'aide du premier terminal mobile (3), la clé d'accès numérique (4) présentant une signature cryptographique (8) attribuée à l'unité de commande (1), qui attribue de manière univoque l'origine de la clé d'accès numérique (4) à l'unité de commande (1) ;
Après l'établissement de la connexion de communication en champ proche autorisée :
génération d'un code lisible par machine (5) attribué directement ou indirectement à la clé d'accès numérique (4) à l'aide du premier terminal mobile (3) ;
affichage du code lisible par machine (5) sur un écran (6) du premier terminal mobile (3) ;
lecture optique du code lisible par machine (5) à partir de l'écran (6) du premier terminal mobile (3) à l'aide d'un deuxième terminal mobile (7) ; obtention de la clé d'accès numérique (4) par le deuxième terminal mobile (7) ;
établissement d'une connexion de communication en champ proche entre le deuxième terminal mobile (7) et l'unité de commande (1) à l'aide de la clé d'accès numérique (4).

2. Procédé selon la revendication 1, dans lequel la connexion de communication en champ proche est active pendant que la clé d'accès numérique (4) est générée au moyen du premier terminal mobile (3).

3. Procédé selon l'une des revendications 1 ou 2, comprenant en outre :
après réception de la clé d'accès numérique (4) par le deuxième terminal mobile (7) : la mémoire locale de la clé d'accès numérique (4) sur le deuxième terminal mobile (7).

4. Procédé selon l'une des revendications 1 à 3, comprenant en outre :
la génération du code lisible par machine (5) directement associé à la clé d'accès numérique (4) au moyen du premier terminal mobile (3) sous une forme textuelle, telle que le codage base64 ou hexadécimal.

5. Procédé selon la revendication 1, dans lequel le premier terminal mobile (3) reçoit une autorisation (9), notamment sous la forme d'un certificat x.509, pour émettre au moins une clé d'accès numérique (4) pendant que la connexion de communication en champ proche est active.

6. Procédé selon la revendication 5, comprenant en outre :
avant l'établissement d'une connexion de communication en champ proche entre le deuxième terminal mobile (7) et l'unité de commande (1) :
la vérification par l'unité de commande (1) de la validité de l'émission de la clé d'accès numérique (4), en particulier de son autorisation (9).

7. Procédé selon la revendication 5, comprenant en outre :
après la génération de la clé d'accès numérique (4) attribuée à l'unité de commande (1) au moyen du premier terminal mobile (3) : la transmission de la clé d'accès numérique (4) générée depuis le premier terminal mobile (3) vers un dispositif de mémoire supérieur (10) auquel ont accès le premier et le deuxième terminal mobile (3, 7) ;
la vérification de la validité de l'autorisation (9) pour l'émission de la clé d'accès numérique (4) dans le dispositif de mémoire supérieur (10) et l'enregistrement de la clé d'accès numérique (4) dans le dispositif de mémoire supérieur (10) en cas de constatation de la validité.

8. Procédé selon la revendication 7, comprenant en outre :
le référencement de la clé numérique (4) au moyen d'un code (11) l'identifiant de manière univoque par le dispositif de mémoire supérieur (10) et la transmission du code (11) au premier terminal mobile (3) ;
la génération du code lisible par machine (5) attribué indirectement à la clé d'accès numérique (4) à l'aide du code (11) identifiant de manière univoque la clé numérique (4).

9. Procédé selon la revendication 8, comprenant en outre :
après la lecture optique du code lisible par machine (5) attribué indirectement à la clé d'accès numérique (4) par le deuxième terminal mobile (7) :
l'obtention du code (11) identifiant de manière univoque la clé numérique (4) par le deuxième terminal mobile (7) ;
l'utilisation du code (11) identifiant de manière univoque la clé numérique (4) dans le dispositif de mémoire supérieur (10) et, à cet effet, la transmission de caractéristiques identifiant de manière univoque le deuxième terminal mobile (7) ; puis l'obtention de la clé d'accès numérique (4) par le deuxième terminal mobile (7).

10. Procédé selon la revendication 9, dans lequel, après l'obtention de la clé d'accès (4) par le deuxième terminal mobile (7), le code (11) identifiant de manière univoque la clé d'accès numérique (4) est bloqué dans le dispositif de mémoire supérieur (10) pour une utilisation ultérieure.

11. Procédé selon la revendication 9 ou 10, dans lequel la clé d'accès numérique (4) est attribuée de manière univoque au deuxième terminal mobile (7), de sorte qu'elle ne peut être utilisée que par le deuxième terminal mobile (7).

12. Procédé selon l'une des revendications 9 à 11, comprenant en outre :
après réception de la clé d'accès numérique (4) par le deuxième terminal mobile (7): l'envoi d'une notification (9) au premier terminal mobile (3) concernant la bonne réception de la clé d'accès numérique (4) par le deuxième terminal mobile (7).

13. Procédé selon l'une des revendications précédentes, dans lequel la lecture optique comprend en outre :
l'ouverture d'un site web (13) qui est présent sous forme d'hyperlien (14) dans le code lisible par machine (5).

14. Procédé selon la revendication 13, dans lequel l'hyperlien (14) présente une commande qui ordonne au deuxième terminal mobile (7) de transférer le code (11) identifiant de manière univoque la clé numérique (4) ou la clé numérique (4) vers une mémoire (15) reliée au deuxième terminal mobile (7).
